# EUROPÄISCHE PATENTSCHRIFT

(11) **EP 2 612 502 B1**
(45) Veröffentlichungstag und Bekanntmachung des Hinweises auf die Patenterteilung: **11.07.2018**
(21) Anmeldenummer: 11748687.8
(22) Anmeldetag: 29.08.2011
(51) Int. Cl.: H04N 13/354, H04N 13/363, H04N 13/341, G06T 15/20

(54) **VERFAHREN ZUR DARSTELLUNG VON MEHREREN BILDFOLGEN**
METHOD FOR REPRESENTING A PLURALITY OF IMAGE SEQUENCES
PROCÉDÉ DE REPRÉSENTATION DE PLUSIEURS SÉRIES D'IMAGES

(30) Priorität: 31.08.2010 DE 102010037256
(43) Veröffentlichungstag der Anmeldung: 10.07.2013
(73) Patentinhaber: Zink, Armin, 51491 Overath (DE); Bauhaus-Universität Weimar, 99423 Weimar (DE)
(72) Erfinder: Zink, Armin, 51491 Overath (DE); Fröhlich, Bernd, 30163 Hannover (DE)
(74) Vertreter: Lenzing Gerber Stute
(86) Internationale Anmeldenummer: PCT/EP2011/064830
(87) Internationale Veröffentlichungsnummer: WO 2012/028586

(56) Entgegenhaltungen:
- US-A1- 2007 097 017
- US-A1- 2009 303 384
- US-B1- 6 377 230
- US-B1- 6 535 241

## Beschreibung

Die Erfindung betrifft ein Verfahren zur Darstellung von mehreren mehrfarbigen Bildfolgen für mindestens zwei Betrachter, wobei eine erste, für einen Betrachter bestimmte Bildfolge von einer weiteren, für einen anderen Betrachter bestimmten Bildfolge verschieden ist, bei dem die Farben von Bildpunkten der Bilder der Bildfolgen aus mindestens drei Grundfarben gemischt werden und die Bildfolgen mit mindestens einem Bildwiedergabegerät angezeigt werden.

Solche Verfahren kommen insbesondere bei der Darstellung virtueller Welten in Räumen wie beispielsweise einer CAVE (Cave Automatic Virtual Environment) zum Einsatz, in denen sich mehrere Betrachter gleichzeitig bewegen und die gleichzeitig ein oder mehrere Objekte betrachten, die ihnen aus einem ihren Standort entsprechenden Blickwinkel dargestellt werden. Die Projektion der virtuellen Welt erfolgt mittels stereoskopischer Bilder, die für jeden Betrachter individuell von Computern in Echtzeit berechnet werden.

Für die stereoskopische Darstellung von Bildern gibt es verschiedene Verfahren, insbesondere die aktive und die passive Stereoprojektion.

Bei der passiven Projektion werden das erste und das zweite Bild eines stereoskopischen Bildpaares gleichzeitig auf einer Projektionswand dargestellt, wobei jedes der Bilder orthogonal polarisiert ist und die Projektionswand die Polarisierung der Bilder unverändert lässt. Die Trennung der Bilder erfolgt durch Filter, beispielsweise Polarisationsfilter. Der Betrachter trägt Brillen mit entsprechenden Filtern, um mit jedem seiner Augen jeweils eines der beiden Bilder wahrzunehmen. Dieses Verfahren eignet sich besonders für große Betrachtergruppen, da die dafür benötigten Brillen aus Papier und zwei Polarisationsfilterfolien äußerst günstig hergestellt werden kann.

Ein anderer Ansatz zur passiven Stereoprojektion besteht darin, in einem der beiden Bilder eines Bilderpaares die Farben gegenüber den Farben des anderen Bildes leicht zu verändern.

Eine weitere Möglichkeit der passiven Bildkanaltrennung bei der Darstellung von stereoskopischen Bilderpaaren besteht darin, verschiedene Wellenlängen als Basis für die Bilddarstellung zweier Bilder zur gleichen Zeit zu verwenden. Bei Verwendung von geeigneten wellenlängenbasierten Filtergläsern passieren dann lediglich die Wellenlängen des einen Bildes das eine Brillenglas, während die Wellenlängen des anderen Bildes das andere Brillenglas passieren, so dass der Betrachter beide Bilder eines Bilderpaares gleichzeitig sieht.

Bei der aktiven Projektionstechnologie werden die beiden Bilder eines Bildpaares sequentiell, also zeitlich nacheinander dargestellt. Zum Betrachten der beiden Bilder werden Shutter-Brillen verwendet, die alternierend die Durchsicht für jeweils ein Auge im Takt des Bildwechsels verschließen, so dass immer ein Auge des Betrachters eines der Bilder eines Bildpaares wahrnimmt, während das andere Auge jeweils das andere Bild des Bildpaares wahrnimmt. Um die Bilder flimmerfrei wahrnehmen zu können sind dabei hohe Bildwiederholraten erforderlich. US 6,535,241 B1 beschreibt ein Projektionssystem für mehrere Betrachter die alle mit Hilfe von Shutter-Brillen unterschiedliche stereoskopische Bilder sehen können.

Will man in einem Raum wie beispielsweise einer CAVE stereoskopische Bilder für verschiedene Betrachter gleichzeitig projizieren, beispielsweise um für alle Betrachter den gleichen virtuellen Gegenstand im Raum darzustellen, aber für jeden Betrachter aus dem Blickwinkel, der dem Standort des jeweiligen Betrachters entspricht, müssen die projizierten Bildpaare für jeden der Betrachter von denen der anderen unterscheidbar bzw. herausfilterbar sein. Dies kann man beispielsweise dadurch erzielen, dass verschiedene der oben beschriebenen Verfahren miteinander kombiniert werden. Eine Kombination verschiedener Verfahren geht allerdings zu Lasten der Bildqualität. Daher wäre ein System, dass auf nur einem der oben beschriebenen Verfahren basiert, wünschenswert. Wenn man allerdings ein Projektionssystem aufbaut, das auf verschiedenen Polarisationswinkeln basiert, um ein Trennen eines Bildpaares für einen Betrachter von den Bildpaaren für andere Betrachter zu ermöglichen, ist dies auch mit einem erheblichen Nachteil verbunden, da die Betrachtungswinkel jedes Benutzers erheblich eingeschränkt sind.

Ein üblicher Ansatz, zur Darstellung von verschiedenen stereoskopischen Bildern für verschiedene Betrachter, beispielsweise zur Projektion eines virtuellen Gegenstands, könnte darin bestehen, eine Vielzahl von Projektoren, zu benutzen. Beispielsweise werden für sechs aufeinander folgende Bilder sechs Projektoren eingesetzt, wobei vor jedem Projektor ein Shutter-Schirm aufgestellt wird. Jeder Schirm wird im Rundlaufverfahren einmal kurz geöffnet, um ein Bild des dahinter stehenden Projektors freizugeben, und ist zu den Zeiten, zu denen einer der anderen Schirme geöffnet ist, geschlossen. Die Gläser einer Shutter-Brille werden jeweils entsprechend geöffnet, um das Bild für das zugeordnete Auge durchzulassen. Offensichtlich ist ein derartiges Projektionssystem sowohl gerätetechnisch, als auch in seiner Handhabung aufwändig.

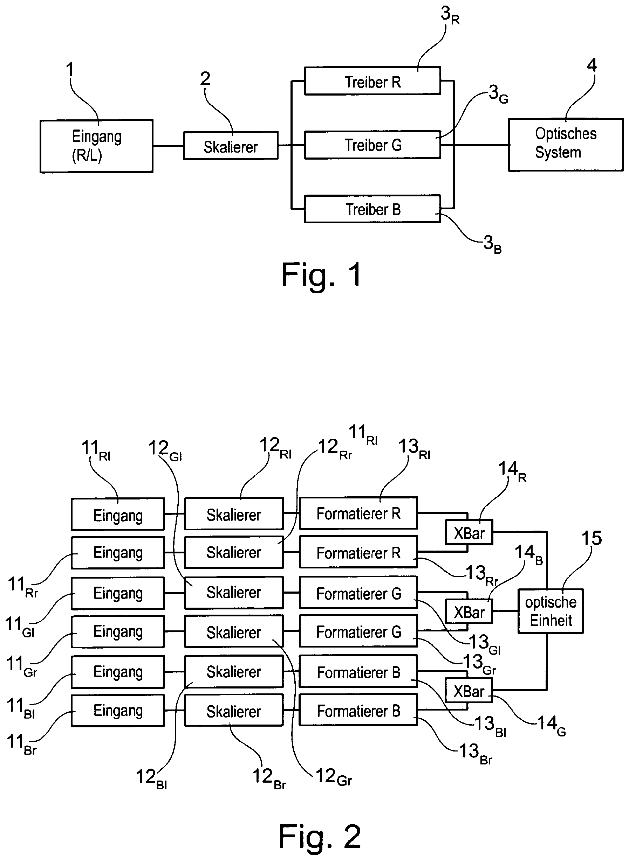

Ein 3-Chip-DLP-Projektor stellt derzeit die größte Rechenleistung zur Darstellung von stereoskopischen Bildern für mehrere Betrachter zur Verfügung, kann aber lediglich zwei alternierende Bilder mit einer Bildwiederholrate von 110 Hz darstellen. In Figur 1 ist der Signalweg in einem solchen Projektor exemplarisch dargestellt. Es ist ein Signaleingang vorgesehen, über den sequentiell jeweils rechte und linke Teilbilder einer stereoskopischen Bildfolge empfangen werden können. Der Signaleingang ist mit einem Scaler 2 verbunden, in dem die rechten und linken Teilbilder nacheinander in ihre Grundfarben rot, grün und blau (RGB) zerlegt werden. Für jede der Grundfarben ist dem Scaler 2 jeweils eine Treiberschaltung 3_{R}, 3_{G}, 3_{B} nachgeschaltet, die die drei DMD-Chips, die zur Anzeige der roten, grünen und blauen Teile eines Teilbildes verwendet werden und in der optischen Einheit 4 enthalten sind, ansteuert. Jede der Treiberschaltungen 3_{R}, 3_{G}, 3_{B} erhält neben den Farbdaten vom Scaler 2 ein Synchronisationssignal, über das die an die DMD weitergeleiteten Daten getaktet wird. Aufgrund der zwei Signaleingänge für die beiden stereoskopischen Teilbilder ist die Anzahl der angezeigten (Teil-) Bilder beschränkt. Jeder Signaleingang wird in seine drei Farbkomponenten R, G und B aufgetrennt, die unabhängig voneinander verarbeitet werden. Es gibt keine Möglichkeit, mehr als ein (Teil-) Bild zur gleichen Zeit zu verarbeiten.

Daher besteht eine Aufgabe der vorliegenden Erfindung darin, ein Verfahren der eingangs genannten Art zu schaffen, das eine Darstellung mehrerer stereoskopischer Bilder bei einer vergleichsweise guten Bildqualität ermöglicht. Eine weitere Aufgabe der vorliegenden Erfindung besteht darin, eine Schaltungsanordnung zur Verfügung zu stellen, mit der die Durchführung des erfindungsgemäßen Verfahrens möglich ist.

Diese Aufgabe wird mit einem Verfahren mit den Merkmalen des Anspruchs 1 sowie mit einer Schaltungsanordnung mit den Merkmalen des Anspruchs 7 gelöst.

Unter einer Bildfolge wird hier und im Folgenden insbesondere eine solche verstanden, die einem Betrachter ein veränderliches oder bewegtes Bild vermittelt, insbesondere die Darstellung von virtuellen Objekten in einem virtuellen Raum, deren projizierte Ansichten sich für einen Betrachter in Abhängigkeit von seiner Position ändern.

Unter dem Anzeigen von Bildfolgen wird insbesondere das Projizieren von Bildfolgen auf einen oder mehrere Projektionsschirme verstanden, aber auch die Anzeige von Bildfolgen auf Bildschirmen oder elektronischen Bildtafeln, sofern sie eine geeignete Bildwiederholrate ermöglichen (beispielsweise auf der OLED-Technologie basierende Anzeigen).

Unter Grundfarben werden die Grundfarben eines Farbraums verstanden, insbesondere die Farben Rot, Grün, Blau bei additiver Farbmischung oder die Farben Cyan, Gelb, Magenta (CYM), ggf. in Verbindung mit Schwarz, bei subtraktiver Farbmischung verstanden. Es sind aber auch andere Kombinationen von Grundfarben denkbar.

Ein Bild im Sinne der vorliegenden Beschreibung besteht aus einer Vielzahl von Bildpunkten, wobei der Farbwert jedes Bildpunktes durch die jeweilige Intensität der Grundfarben beschrieben wird.

Das erfindungsgemäße Verfahren ist durch den Anspruch 1 definiert. Mit anderen Worten besteht ein wesentlicher Teil der Erfindung darin, die Farbinformationen der parallel empfangenen Bildfolgen in die Grundfarben zu zerlegen und dann in getrennten Datenkanälen insbesondere digital zu verarbeiten, um dann die einzelnen Grundfarbteile der Bilder wieder gemeinsam anzuzeigen, wobei dann Bilder verschiedener Bildfolgen sequentiell im Wechsel angezeigt werden. Dabei können die Bilder zweier Bildfolgen paarweise die Teilbilder von stereoskopischen Bildern einer stereoskopischen Bildfolge sein. Durch das Zerlegen der Bilder kann in die Grundfarben wird es möglich, in einer schlanken parallelen Datenverarbeitungsstruktur mit je einem Datenverarbeitungskanal pro Grundfarbe für Monobildfolgen bzw. zwei Datenverarbeitungskanälen je Grundfarbe für stereoskopische Bildfolgen eine Vielzahl von Bildfolgen, deren Signale parallel empfangen werden, sequentiell zu bearbeiten.

Um ein im Wesentlichen flimmerfreies Bild zu erzeugen, muss lediglich die Anzeigedauer je Bild entsprechend verkürzt werden, so dass für jede Bildfolge ein Bild mit einer Frequenz von etwa 60 Hz dargestellt wird. Zum Beispiel kann die Anzeigedauer bei 6 parallel anzuzeigenden Bildfolgen - dies entspricht beispielsweise drei stereoskopischen Bildfolgen für drei Betrachter - für jedes Bild 1/360 Sekunde betragen. Je kürzer die Anzeigedauer eines Bildes, desto geringer die Helligkeit, mit der das Bild wahrgenommen wird. Diese Beeinträchtigung kann ohne Weiteres durch eine Anpassung der Helligkeit der Bildanzeige ausgeglichen werden. Dies stellt jedoch keine unüberwindliche und damit wesentliche Einbuße in der Bildqualität dar.

In einer besonderen Ausgestaltung des erfindungsgemäßen Verfahrens werden die Teilbilder eines stereoskopischen Bildes sequentiell unmittelbar hintereinander dargestellt. Sie können alternativ auch erst alle rechten Teilbilder aller stereoskopischen Bildfolgen sequentiell hintereinander dargestellt werden, und danach die dazugehörigen linken Teilbilder aller stereoskopischen Bildfolgen.

Das erfindungsgemäße Verfahren ermöglicht die Verwendung von Ein-Chip-DLP-Projektoren zur Projektion von verschiedenen Bildfolgen für mehrere Betrachter, wobei für jede Grundfarbe mindestens ein Ein-Chip-DLP-Projektor zum Einsatz kommt, so dass die Beschränkungen eines solchen Projektors hinsichtlich der Synchronisation des Bildwechsels mit den durch das Farbrad eines solchen Projektors vorgegebenen Farbwechseln entfallen. Auch entfallen durch die Parallelverarbeitung der einzelnen Signalbestandteile die Beschränkungen, die in einem herkömmlichen Drei-Chip-DLP-Projektor durch die Verwendung eines den gesamten Bildinhalt verarbeitenden Scalers entstehen, so dass das Verfahren bei entsprechender Anpassung der Hardware natürlich auch auf einem Drei-Chip-DLP-Projektor zum Einsatz kommen kann.

Die Erfindung wird auch gelöst durch eine Schaltungsanordnung mit den Merkmalen des Anspruchs 7. Die erfindungsgemäße Schaltungsanordnung dient dazu, parallel verschiede Bildfolgen zu empfangen und die empfangenen Bildinformationen in ihre Grundfarbinformationen zu zerlegen und nach Grundfarben sortiert über die Signalausgänge auszugeben. Die Bildsignale werden spätestens nach ihrem Erhalt über einen Signaleingang mindestens bildpunktweise parallel verarbeitet, und die umsortierten Bildsignale liegen nach Grundfarben sortiert zumindest unmittelbar vor dem jeweiligen Signalausgang mindestens so vor, dass alle über einen Signalausgang auszugebenden Grundfarbinformationen aller dem Signalausgang zugeordneten Signaleingänge zu einem gleichen Bildpunkt parallel anliegen. So wird beispielsweise bei einer Farbtiefe von 24 Bit in RGB die Farbinformation zu einem Bildpunkt eines Bildes in seine Grundfarbinformationen (8 Bit Rot, 8 Bit Grün, 8 Bit Blau) zerlegt. Danach werden die Grundfarbinformationen des gleichen Bildpunktes auf den verschiedenen Grundfarbkanälen wieder in 24 Bit Datenpakete zusammengefasst, nämlich 8-Bit rot eines Bildpunktes eines Bildes einer ersten Bildfolge, 8 Bit rot des gleichen Bildpunktes eines Bildes einer zweiten Bildfolge und 8-Bit rot des gleichen Bildpunktes eines Bildes einer dritten Bildfolge. Entsprechendes passiert auf den Datenkanälen für die Farben Grün und Blau. Dabei ist es unerheblich, ob die Daten an den Signalein- und -ausgängen selbst seriell übertragen werden, wie beispielsweise bei DVI-Schnittstellen, oder parallel. Der Vorteil der parallelen Datenverarbeitung innerhalb der erfindungsgemäßen Schaltungsanordnung liegt darin, dass die Farbdatenbits parallel in FPGAs schnell und effizient verarbeitet werden können.

Die erfindungsgemäße Schaltungsanordnung kann beispielsweise einer Anzahl von Projektoren vorgeschaltet werden, von denen jeder Projektor zur Darstellung der Teilbilder in jeweils einer der Grundfarben dient, wobei zumindest die Projektoren untereinander zu synchronisieren sind, so dass sie tatsächlich gleichzeitig jeweils die Teilbilder des gleichen Bildes anzeigen.

Die Schaltungsanordnung kann aber auch in einen Projektor, beispielsweise einen Drei-Chip-DLP-Projektor, integriert sein.

Die erfindungsgemäße Schaltung kann so aufgebaut sein, dass die Datenverarbeitungskanäle paarweise zur Verarbeitung von stereoskopischen Bildfolgen verwendet werden. Dabei ist darauf zu achten, dass die Signaleingänge so gekennzeichnet sind, dass einem Nutzer deutlich wird, dass sie jeweils als rechter und linker Signaleingang für eine stereoskopische Bildfolge dienen, damit bei der nachfolgenden Datenverarbeitung und Synchronisation klar ist, dass es sich bei zwei Bildfolgen tatsächlich um zusammengehörende stereoskopische Bildfolgen handelt. Dies ist beispielsweise für die Trennung der Bildanzeigen beim Betrachter wichtig, insbesondere wenn Shutter-Brillen eingesetzt werden, die so gesteuert sein müssen, dass sich die Gläser einer Brille genau dann öffnen, wenn das für den Betrachter bestimmte rechte oder linke Teilbild angezeigt werden.

Für die Anzeige stereoskopischer Bildfolgen hat die Schaltungsanordnung bevorzugt jeweils einen ersten und einen zweiten Signalausgang je Grundfarbe, wobei an dem ersten Signalausgang je Grundfarbe alle rechten Teilbilder verschiedener, über die Signaleingänge empfangener Bildfolgen und am zweiten Signalausgang je Grundfarbe alle linken Teilbilder verschiedener, über die Signaleingänge empfangener Bildfolgen ausgegeben werden. Damit können die ausgegebenen Signale sofort parallel weiterverarbeitet werden, und Engpässe bei der Datenverarbeitung werden vermieden. Natürlich ist es aber genauso möglich, das rechte und linke Teilbild in einer sequentiellen Folge über einen der Grundfarbe zugeordneten Datenkanal auszugeben.

Im Weiteren ist erfindungsgemäß ein Projektorsystem zur parallelen Anzeige verschiedener Bildfolgen für unterschiedliche Betrachter dadurch gekennzeichnet, dass es für jede Grundfarbe zwei parallele Signalverarbeitungsstrecken aufweist, die von der zuvor beschriebenen Schaltungsanordnung mit Signalen gespeist werden.

Im Nachfolgenden wird die Erfindung anhand von Figuren, die beispielhaft Teilaspekte der Erfindung verdeutlichen, näher erläutert.

Es zeigen
- Fig. 1: ein Schaltungsschema für einen aus dem Stand der Technik vorbekannten Drei-Chip-DLP-Projektor;
- Fig. 2: ein Schaltungsschema für einen Drei-Chip-DLP-Projektor gemäß der vorliegenden Erfindung;
- Fig. 3: Funktionsdiagramm für eine erfindungsgemäße Schaltung zur Umsortierung der Bilddaten verschiedener zu projizierender Bilder;
- Fig. 4: ein Funktionsdiagramm für einen aus dem Stand der Technik vorbekannten Ein-Chip-DLP-Projektor;
- Fig. 5: ein Diagramm über die Folge von drei Ein-Chip-DLP-Projektoren angezeigten Bilder über einem Zeitstrahl;
- Fig. 6: ein Diagramm zur Schaltung von Shutter-Brillen mehrerer Benutzung synchron zur Bildanzeige;
- Fig. 7: ein Diagramm zu den erfindungsgemäß zu einer schnellen Schaltung von Shutter-Brillen verwendeten Signalen.

Das in Figur 1 dargestellte Schaltungsschema eines vorbekannten Drei-Chip-DLP-Projektors wurde bereits eingangs erläutert.

Figur 2 zeigt nun ein Schaltungsschema eines erfindungsgemäßen Drei-Chip-DLP-Projektors, der in der Lage ist, verschiedene Bilder für verschiedene Betrachter im Wesentlichen parallel anzuzeigen. Im Gegensatz zu einem herkömmlichen Drei-Chip-DLP-Projektor weist er sechs Signaleingänge 11_{Rr}, 11_{Rl}, 11_{Gr}, 11_{Gl}, 11_{Br}, 11_{Bl} auf, nämlich jeweils zwei Signaleingänge für jede der Grundfarben RGB, wobei der jeweils eine der beiden Signaleingänge 11_{Rr}, 11_{Gr}, 11_{Br} die Grundfarbinformationen des rechten Teilbildes, der jeweils andere der beiden Signaleingänge 11_{Rl}, 11_{Gl}, 11_{Bl} die Grundfarbinformationen des linken Teilbildes eines stereoskopischen Bildes empfängt. Jeder der Signaleingänge ist jeweils mit einem in Signalflussrichtung nachgeordneten Scaler 12_{Rr}, 12_{Rl}, 12_{Gr}, 12_{Gl}, 12_{Br}, 12_{Bl} verbunden, der die empfangenen Signale aufbereitet und einer ihm nachgeschalteten Treiberschaltung 13_{Rr}, 13_{Rl}, 13_{Gr}, 13_{Gl}, 13_{Br}, 13_{Bl} zuführt, in der die Daten zur Wiedergabe auf einem der drei DMD-Chips des DLP-Projektors vorbereitet.

Die rechten und linken Teilbilder einer Grundfarbe werden einem DMD-Chip des DLP-Projektors sequentiell von der jeweiligen Treiberschaltung 13_{Rr}, 13_{Rl}, 13_{Gr}, 13_{Gl}, 13_{Br}, 13_{Bl} über eine Umschalteinrichtung 14_{R}, 14_{G}, 14_{B} dem der Grundfarbe zugeordneten DMD-Chip als Bestandteil eines optischen Systems 15 zugeführt, wobei alle drei Farbbestandteile eines Teilbildes dem optischen System gleichzeitig und synchronisiert zugeführt werden.

So können eine Vielzahl von stereoskopischen Bildern hintereinander angezeigt werden, wobei die Anzeige einer Folge von Bildern mit Shutter-Brillen unterschiedlicher Betrachter so synchronisiert sein können, dass jeder Betrachter nur die für ihn bestimmten Bilder sieht. Beispielsweise kann eine Sequenz von jeweils sechs aufeinander folgenden, projizierten Bildern mit den Shutter-Brillen so synchronisiert sein, dass ein erster Betrachter immer nur das erste der Sequenz von sechs Bildern sieht, der zweite Betrachter nur das zweite Bild, usw..

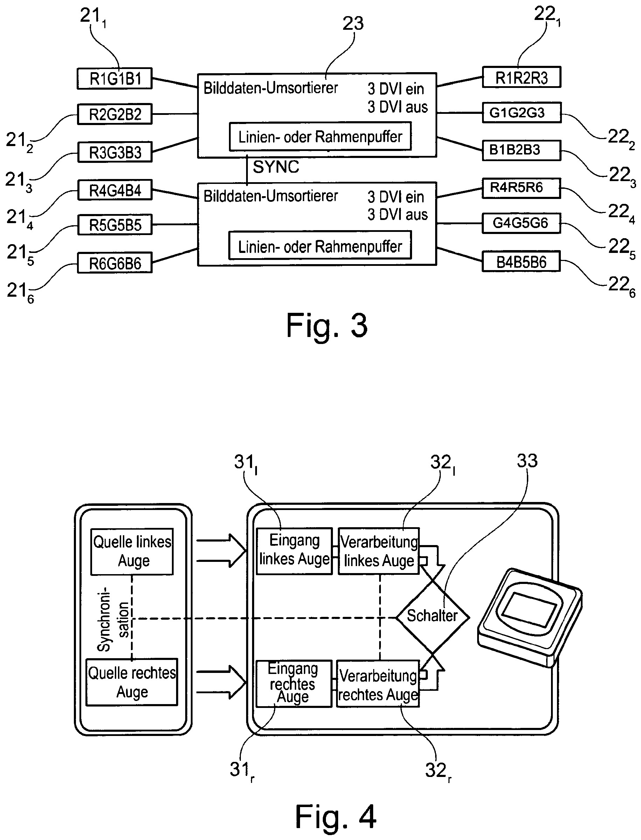

Figur 3 zeigt ein Funktionsdiagramm für eine erfindungsgemäße Schaltungsanordnung für ein Projektorsystem. Sie weist sechs Signaleingänge 21₁, 21₂, 21₃, 21₄, 21₅, 21₆ sowie sechs Signalausgänge 22₁, 22₂, 22₃, 22₄, 22₅, 22₆ auf, die über eine Sortier- und Pufferschaltung miteinander verbunden sind. Darin werden die Signaldaten RᵢGᵢBᵢ (der Index i steht für die Nummer des Signaleingangs) in ihre Bestandteile Ri, Gi, Bi zerlegt und auf die Signalausgänge neu verteilt, wobei die Signale R₁, R₂, R₃ parallel dem Signalausgang 22₁, die Signale G₁, G₂, G₃ parallel dem Signalausgang 22₂, die Signale B₁, B₂, B₃ parallel dem Signalausgang 22₃, die Signale R₄, R₅, R₆ parallel dem Signalausgang 22₄, die Signale G₄, G₅, G₆ parallel dem Signalausgang 22₅ und die Signale B₄, B₅, B₆ parallel dem Signalausgang 22₆ zugeführt. Soll die Schaltungsanordnung zur Übertragung von stereoskopischen Bildfolgen verwendet werden, können die rechten und linken Teilbilder beispielsweise an die Signaleingänge 21₁ und 21₄, 21₂ und 21₅ sowie 21₃ und 21₆ angelegt werden.

Diese beispielhafte Schaltungsanordnung kann dem in Figur 2 dargestellten Schaltungsschema vorgeschaltet sein, so dass der Signalausgang 22₁ mit dem Signaleingang 11_{Rr}, der Signalausgang 22₂ mit dem Signaleingang 11_{Rl}, der Signalausgang 22₃ mit dem Signaleingang 11_{Gr}, der Signalausgang 22₄ mit dem Signaleingang 11_{Gl}, der Signalausgang 22₅ mit dem Signaleingang 11_{Br} und der Signalausgang 22₆ mit dem Signaleingang 11_{Bl} verbunden sind. Mit einer solchen Schaltung lassen sich dann drei verschiedene stereoskopische Bildfolgen für verschiedene Betrachter parallel projizieren.

Alternativ können mit der in Figur 3 dargestellten Schaltungsanordnung auch drei Ein-Chip-DLP-Projektoren betrieben werden, deren Funktionsschema in Fig. 4 gezeigt wird. Jeder dieser Ein-Chip-DLP-Projektoren wird zur Projektion der Bilder der verschiedenen Bildfolgen in jeweils einer der Grundfarben verwendet. Jeder der Ein-Chip-DLP-Projektoren hat zwei Signaleingänge 31ᵣ, 31ₗ für die rechten und linken Teilbilder von Stereobildern in einer der Grundfarben. Die Teilbilder werden parallel in den Treiberschaltungen 32ᵣ, 32ₗ verarbeitet und über einen Umschalter 33 dem DMD-Chip des Projektors zugeführt, wobei die Bilddatenverarbeitung in den Treiberschaltungen durch ein externes Taktsignal synchronisiert wird. Das Farbrad eines solchen Ein-Chip-DLP-Projektors muss nicht mehr rotieren bzw. kann durch ein einfarbiges Farbrad ersetzt werden, so dass die durch die Farbwechsel eines rotierenden Farbrades vorgegebenen Beschränkungen der Taktung von Bildwechseln entfällt.

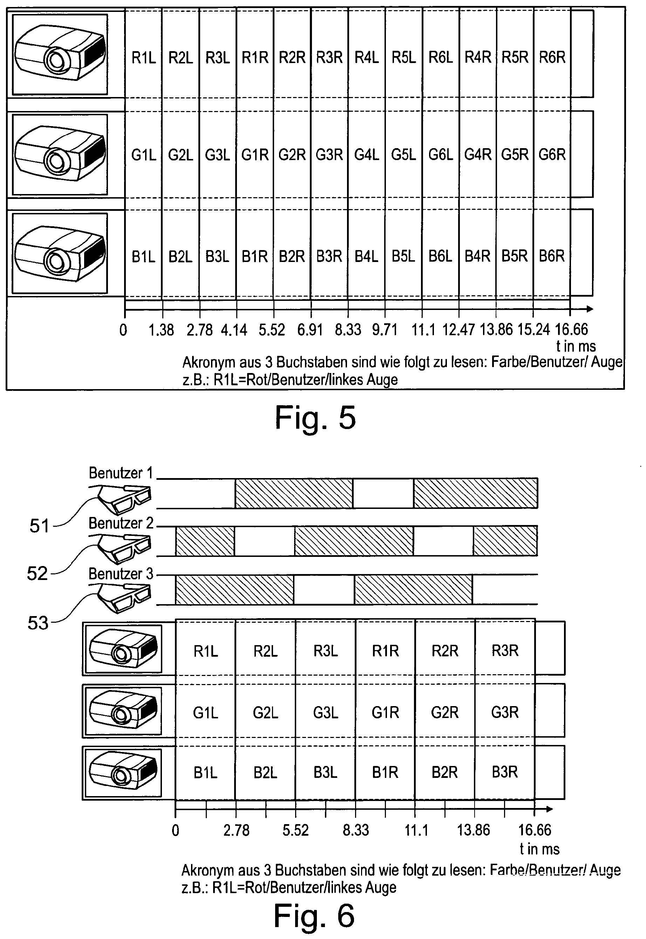

In Figur 5 ist die Reihenfolge von verschiedenen Bildern, die von drei Projektoren parallel projiziert werden, dargestellt, wobei der erste Projektor 41 lediglich den Rotanteil, der Projektor 42 den Grünanteil und der Projektor 43 den Blauanteil der Bilder wiedergibt. Als erstes Bild wird das linke Teilbild einer ersten stereoskopischen Bildfolge in den Farben rot, grün und blau (R1L, G1L, B1L) projiziert, darauf folgt das linke Teilbild einer zweiten stereoskopischen Bildfolge in den Farben rot, grün und blau (R2L, G2L, B2L) und dann das linke Teilbild einer dritten stereoskopischen Bildfolge ebenso in den Farben rot grün und blau (R3L, G2L, B2L). Danach werden dementsprechend die jeweils rechten Teilbilder der ersten, zweiten und dritten stereoskopischen Bildfolgen in der Reihenfolge (R1R, G1R, B1R), (R2R, G2R, B2R) und (R3R, G3R, B3R) projiziert. Daran schließt sich entsprechend die Anzeige der rechten und linken Teilbilder einer vierten, fünften und sechsten stereoskopischen Bildfolge in der Reihenfolge (R4L, G4L, B4L), (R5L, G5L, B5L), (R6L, G6L, B6L), (R4R, G4R, B4R), (R5R, G5R, B5R) und (R6R, G6R, B6R) an. Jedes Bild wird für eine Dauer von 1.38 ms, also einer 1/720 Sekunde, angezeigt, alle Teilbilder in einem Zeitraum einer 1/60 Sekunde. Somit werden sechs Betrachtern gleichzeitig unterschiedliche stereoskopische Bildfolgen gleichzeitig angezeigt.

Aus der in Figur 5 dargestellten Bildfolge ergibt sich, dass mit drei Projektoren 6 stereoskopische Bildfolgen dargestellt werden. Um dies mit üblicherweise Projektoren zu erreichen, deren Bilddatenverarbeitung mit 60 Hz getaktet ist, kann entweder ein gegenüber Figur 2 modifiziertes Schaltungsschema verwendet werden, bei dem anstelle von sechs 12 Signaleingänge verwendet werden, nämlich vier für rote Bilddaten, vier für grüne Bilddaten und vier für blaue Bilddaten, und sich an die Signaleingänge jeweils ein Scaler und eine Treiberschaltung anschließen, wobei dann alle vierTreiberschaltungen über einen Umschalter mit dem der jeweiligen Grundfarbe zugeordneten DMD-Chip des optischen Systems verbunden sind, so dass sequentiell vier verschiedene Teilbilder einer Farbe hintereinander angezeigt werden können. Die 12 Signaleingänge könnten dann über zwei der in Figur 3 dargestellten Schaltungsanordnungen versorgt werden.

Ist die Taktfrequenz der bildverarbeitenden Elemente im Projektor hoch genug, kann auch mit dem Schaltungsschema aus Figur 2 das gleiche Ergebnis erzielt werden, wenn beispielsweise über die Eingänge (Teil-) Bilder zweier (stereoskopischer) Bildfolgen sequentiell hintereinander eingehen.

Eine andere Variante besteht darin, dass ein Datenpaket von beispielsweise 10 Bit, das üblicherweise die Daten zu einer Grundfarbe eines Bildpunktes enthält, auf zwei Datenpakete zu je 5 Bit aufgeteilt wird, in denen die Farbinformationen zu einer Grundfarbe von zwei Bildpunkten enthalten ist. Diese Aufteilung des Datenpakets müsste dann an geeigneter Stelle in der Treiberschaltung des Datenkanals erfolgen, so dass dem Umschalter erst der eine Teil des Datenpakets zur Anzeige eines ersten Teilbildes, und dann der zweite Teil des Datenpakets zur Anzeige des zweiten Teilbildes zur Verfügung gestellt wird.

In allen Ausführungsformen kann ein externes Taktsignal beispielsweise von einem Taktgenerator zur Verfügung gestellt werden, der die synchrone Bilddatenverarbeitung sowohl in der in Figur 3 dargestellten Schaltungsanordnung, als auch in den Projektoren und gegebenenfalls in den Signalquellen (beispielsweise Computer) steuert oder auch die Taktung der von Betrachtern benutzten Shutter-Brillen vorgibt.

In Figur 6 ist anhand einer Projektion dreier verschiedener stereoskopischer Bildfolgen für drei Betrachter dargestellt, wie die Shutter-Brillen mit der Bildfolge zu synchronisieren sind. Es ist deutlich erkennbar, dass das linke Glas der ersten Shutter-Brille 51 für die Dauer der Anzeige des linken Teilbildes (R1L, G1L, B1L) einer ersten stereoskopischen Bildfolge transparent geschaltet ist, dann das linke Glas der zweiten Shutter-Brille 52 für die Dauer der Anzeige des linken Teilbildes (R2L, G2L, B2L) einer zweiten stereoskopischen Bildfolge und dann das linke Glas der dritten Shutter-Brille 53 für die Dauer der Anzeige des linken Teilbildes (R1L, G1L, B1L) einer dritten stereoskopischen Bildfolge. Dementsprechend werden darauf folgend die rechten Gläser der Shutter-Brillen 51, 52, 53 jeweils für die Dauer der Anzeige der entsprechenden rechten Teilbilder (R1R, G1R, B1R), (R2R, G2R, B2R), (R3R, G3R, B3R) transparent geschaltet. Zur Synchronisierung wird jede der Shutter-Brillen mit einem anderen Code angesteuert, so dass die Synchronisationssignale für jede der Shutter-Brillen verschieden sind und eine von anderen Shutter-Brillen unabhängige Synchronisierung einer Shutter-Brille möglich ist.

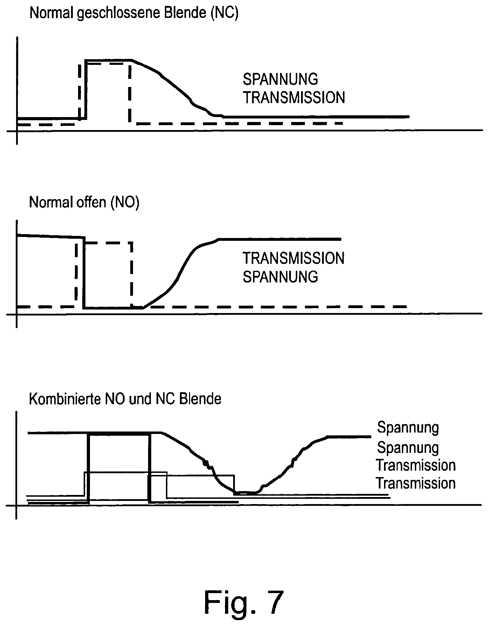

Um verschiedene paralleler Bildfolgen für verschiedene Betrachter voneinander zu trennen, können schnell schaltende Shutter-Brillen verwendet werden, deren Gläser aus zwei Flüssigkristallflächen bestehen (je eine für das linke und rechte Auge), die elektronisch zwischen durchlässig und undurchlässig umgeschaltet werden können. Der Signalgang und die damit verbundene Transparenz herkömmlicher und schnell schaltender Shutter-Gläser ist in Figur 7 wiedergegeben. Während die Flüssigkristallflächen schnell reagieren, wenn sie eingeschaltet werden und damit ihre Durchlässigkeit von nicht durchlässig nach durchlässig bzw. von durchlässig nach nicht durchlässig umschalten, reagieren sie sehr langsam, wenn die Spannung ausgeschaltet wird und sich wieder in ihren Ursprungszustand zurück versetzen von durchlässig nach nicht durchlässig bzw. von nicht durchlässig nach durchlässig (s. die beiden oberen Diagramme in Figur 7). Dies ist unproblematisch, wenn die Anzeige eines Bildes einer Bildfolge lang genug angezeigt wird. Ist die Bildwechselrate aber hoch, weil für verschiedene Benutzer, die auf der gleichen Anzeige- bzw. Projektionsfläche verschiedene Bildfolgen parallel und flimmerfrei sehen sollen, führt das langsame Zurücksetzen der Gläser zu Problemen, da der Betrachter Teile eines Folgebildes zu sehen bekommt, das für einen anderen Betrachter gedacht ist. Um das Problem zu lösen, kann jedes Glas der Shutter-Brille aus zwei hintereinander angeordneten Flüssigkristallflächen gebildet sein, von denen eine im ungeschalteten Zustand transparent und die andere in ungeschaltetem Zustand undurchlässig ist. Soll ein solches Glas durchsichtig werden, wird eine Spannung an die undurchsichtige Flüssigkristallfläche angelegt, die dann sprunghaft durchsichtig wird. Soll das Glas undurchsichtig werden, wird an die transparente Flüssigkristallfläche eine Spannung angelegt, die dann sprunghaft intransparent wird. Gleichzeitig oder kurz darauf kann die ursprünglich undurchsichtige Flüssigkristallfläche ausgeschaltet werden. Wenn letztere Flüssigkristallfläche wieder vollständig undurchsichtig ist, kann auch die ursprünglich transparente Flüssigkristallfläche ausgeschaltet werden, so dass sie wieder transparent wird, wobei das Glas weiterhin undurchsichtig bleibt (s. unteres Diagramm in Figur 7).

Die hier beschriebenen Beispiele der Erfindung oder von Teilen hiervon haben rein exemplarischen Charakter und sollen den Umfang der Ansprüche nicht beschränken. Insbesondere ist die beschriebene Erfindung nicht auf die Verwendung mit DLP-Projektoren beschränkt, selbst wenn die darin verwendete, auf Mikrospiegeln basierende Projektionstechnik besonders geeignet für die Projektion schneller Bildwechsel ist. Grundsätzlich lässt sich die Erfindung auch für die parallele Projektion von verschiedenen (stereoskopischen) Bildfolgen mit jeder anderen Art von Projektoren wie beispielsweise LCD-Beamern, aber auch zur Anzeige von mehreren parallelen (stereoskopischen) Bildfolgen mit geeigneten Bildschirmen/Anzeigetafeln verwenden. Bei der Verwendung von DLP-Projektoren kann auch auf die Verwendung von Scalern verzichtet werden, insbesondere dann, wenn die an den Signaleingängen zur Verfügung gestellten Bilddaten hinsichtlich Bildauflösung, Bildhelligkeit und/oder Bildwiederholfrequenz an die Bildverarbeitungsmöglichkeiten des Projektors angepasst sind.

## Patentansprüche

1. Verfahren zur Darstellung von mehreren mehrfarbigen Bildfolgen, insbesondere für mindestens zwei Betrachter, wobei eine erste, für einen Betrachter bestimmte Bildfolge von einer weiteren, für einen anderen Betrachter bestimmten Bildfolge verschieden ist, bei dem die Bildfolgen mit mindestens einem Bildwiedergabegerät auf einen oder mehrere Projektionsschirme projiziert werden, **gekennzeichnet durch** die folgenden Schritte:
i. Paralleles Empfangen von Bildern mindestens zweier Folgen mehrfarbiger Bilder in Form digitaler Daten an hierfür vorgesehenen Signaleingängen (21₁, 21₂, 21₃, 21₄, 21₅, 21₆), wobei sich jedes Bild aus Bildpunkten zusammensetzt und die digitalen Daten für jeden Bildpunkt Farbinformationen (RᵢGᵢBᵢ) in Form von Farbdatenbits für mindestens drei Grundfarben enthalten;
ii. Zerlegen der Farbinformationen (RᵢGᵢBᵢ) der Bildpunkte der parallel empfangenen Bilder in ihre Grundfarbteile (Rᵢ, Gᵢ, Bᵢ) und bildpunktweises Zusammenfassen der Grundfarbteile (Rᵢ, Gᵢ, Bᵢ) von Bildpunkten mindestens zwei parallel empfangener Bilder in jeweils einem Datenpaket je Grundfarbe,
iii. Bereitstellen der Datenpakete an mindestens einem Signalausgang (22₁, 22₂, 22₃, 22₄, 22₅, 22₆) je Grundfarbe, wobei an jedem Signalausgang (22₁, 22₂, 22₃, 22₄, 22₅, 22₆) die Datenpakete einer Grundfarbe ausgegeben werden;
iv. paralleles Verarbeiten der an den Signalausgängen (22₁, 22₂, 22₃, 22₄, 22₅, 22₆) ausgegebenen Datenpakete der verschiedenen Grundfarben in jeweils mindestens einem Datenkanal pro Grundfarbe des mindestens einen Projektors;
v. gleichzeitiges Anzeigen aller Grundfarbteile (Rᵢ, Gᵢ, Bᵢ) eines Bildes mit dem mindestens einen Projektor, wobei sequentiell die Bilder verschiedener Bildfolgen aufeinander folgen.

2. Verfahren nach Anspruch 1, **dadurch gekennzeichnet, dass** die Bilder zweier Bildfolgen paarweise die Teilbilder von stereoskopischen Bildern einer stereoskopischen Bildfolge sind.

3. Verfahren nach Anspruch 2, **dadurch gekennzeichnet, dass** die Teilbilder eines stereoskopischen Bildes sequentiell unmittelbar hintereinander dargestellt werden.

4. Verfahren nach Anspruch 2, **dadurch gekennzeichnet, dass** erst die ersten Teilbilder der stereoskopischen Bilder mindestens zweier stereoskopischer Bildfolgen und danach die jeweils zweiten Teilbilder der Bilder dieser Bildfolgen angezeigt werden.

5. Verfahren nach einem der Ansprüche 1 bis 4, **dadurch gekennzeichnet, dass** zur Darstellung jeder der Grundfarben eines Bildes jeweils mindestens ein Projektor, insbesondere ein Ein-Chip-DLP-Projektor, verwendet wird.

6. Verfahren nach einem der Ansprüche 1 bis 4, **dadurch gekennzeichnet, dass** alle Grundfarben von einem Projektor, insbesondere einem Drei-Chip-DLP-Projektor, dargestellt werden.

7. Schaltungsanordnung für ein Projektorsystem, das insbesondere zur Durchführung eines Verfahrens gemäß einem der Ansprüche 1 bis 6 geeignet ist, **gekennzeichnet durch**
- mindestens zwei Signaleingänge (21₁, 21₂, 21₃, 21₄, 21₅, 21₆), von denen jeder als Eingang für die digitalen Bildsignale einer darzustellenden Bildfolge dient und die Bildsignale auf mindestens drei Grundfarben basieren,
- je Grundfarbe mindestens einen Signalausgang (22₁, 22₂, 22₃, 22₄, 22₅, 22₆), wobei die Grundfarbe mehrerer Signaleingänge (21₁, 21₂, 21₃, 21₄, 21₅, 21₆) einem Signalausgang (22₁, 22₂, 22₃, 22₄, 22₅, 22₆) zugeordnet ist,
- eine Sortiereinheit, in der die Bildsignale der über die verschiedenen Signaleingänge im Wesentlichen empfangenen Bildsignale in ihre Grundfarben zerlegt und die Farbdatenbits für die Bildpunkte eines Bildes so sortiert werden, dass an jedem der Signalausgänge (22₁, 22₂, 22₃, 22₄, 22₅, 22₆) die empfangenen Signale einer Grundfarbe aller Signaleingänge (21₁, 21₂, 21₃, 21₄, 21₅, 21₆), die dem jeweiligen Signalausgang zugeordnet sind, ausgegeben werden.

8. Schaltungsanordnung nach Anspruch 7, **dadurch gekennzeichnet, dass** die Bildsignale spätestens nach ihrem Erhalt über einen Signaleingang mindestens bildpunktweise parallel verarbeitet werden, und die umsortierten Bildsignale nach Grundfarben sortiert zumindest unmittelbar vor dem jeweiligen Signalausgang mindestens so vorliegen, dass alle über einen Signalausgang auszugebenden Grundfarbinformationen aller dem Signalausgang zugeordneten Signaleingänge zu einem gleichen Bildpunkt parallel anliegen.

9. Schaltungsanordnung nach Anspruch 7 oder 8, **gekennzeichnet durch** jeweils zwei Signaleingänge als Signaleingänge für rechte und linke Teilbild einer stereoskopischen Bildfolge.

10. Schaltungsanordnung nach Anspruch 9, **gekennzeichnet durch** jeweils einen ersten und einen zweiten Signalausgang je Grundfarbe, wobei an dem ersten Signalausgang je Grundfarbe alle rechten Teilbilder verschiedener, über die Signaleingänge empfangener Bildfolgen und am zweiten Signalausgang je Grundfarbe alle linken Teilbilder verschiedener, über die Signaleingänge empfangener Bildfolgen ausgegeben werden.

11. Projektorsystem zur parallelen Anzeige von verschiedener Bildfolgen für unterschiedliche Betrachter, **dadurch gekennzeichnet, dass** es für jede Grundfarbe zwei parallele Signalverarbeitungsstrecken aufweist, die von einer Schaltungsanordnung nach einem der Ansprüche 7 bis 10 mit Signalen gespeist werden.

## Claims

1. A method for representing a plurality of multi-coloured image sequences, in particular for at least two observers, wherein a first image sequence intended for an observer is different from a further image sequence intended for another observer, in which the image sequences are projected onto one or more projection screens with at least one image reproduction device, **characterized by** the following steps:
i. receiving images of at least two sequences of multi-coloured images as digital data in parallel at signal inputs (21₁, 21₂, 21₃, 21₄, 21₅, 21₆) provided therefor, wherein each image is assembled by image points and said digital data contains colour information (RᵢGᵢBᵢ) for each image point in the form of colour-data bits for at least three basic colours;
ii. breaking down said colour information (RᵢGᵢBᵢ) of the image points of the images received in parallel to their basic colour components (Rᵢ, Gᵢ, Bᵢ) and image-point-wise merging said basic colour components in one data packet per basic colour respectively, the colour components (Rᵢ, Gᵢ, Bᵢ) being of the image points of at least two images received in parallel;
iii. providing the data packet at at least one signal output (22₁, 22₂, 22₃, 22₄, 22₅, 22₆) per basic colour, wherein at each signal output (22₁, 22₂, 22₃, 22₄, 22₅, 22₆) the data packets of one basic colour are output;
iv. parallel processing of said data packets of the different basic colours output at the signal outputs (22₁, 22₂, 22₃, 22₄, 22₅, 22₆) in at least one data channel of said projector per basic colour;
v. simultaneously displaying all basic colour components (Rᵢ, Gᵢ, Bᵢ) of an image with the at least one projector, wherein images of different image sequences follow one another in sequence.

2. The method according to claim 1, **characterized in that** the images of two image sequences pair-wise are the partial images of stereoscopic images of a stereoscopic image sequence.

3. The method according to claim 2, **characterized in that** the partial images of a stereoscopic image are represented directly after each other in sequence.

4. The method according to claim 2, **characterized in that** firstly, the first partial images of the stereoscopic images of at least two stereoscopic image sequences are displayed, and then, the respective second partial images of the images of these image sequences are displayed.

5. The method according to any of the claims 1 to 4, **characterized in that** for representing all basic colours of an image, in each case at least one projector is used, in particular a 1-Chip-DLP-projector.

6. The method according to any of the claims 1 to 4, **characterized in that** all basic colours are represented by a projector, in particular by a 3-Chip-DLP-projector.

7. A circuit arrangement for a projector system, which is in particular suitable for executing a method according to any of the claims 1 to 6, **characterized by**:
- at least two signal inputs (21₁, 21₂, 21₃, 21₄, 21₅, 21₆), each of which is configured as a digital signal input for image signals of an image sequence to be represented, wherein the image signals are based on at least three basic colours,
- at least one signal output (22₁, 22₂, 22₃, 22₄, 22₅, 22₆) per basic colour, wherein the basic colour of multiple signal inputs (21₁, 21₂, 21₃, 21₄, 21₅, 21₆) is associated with one signal output (22₁, 22₂, 22₃, 22₄, 22₅, 22₆), and
- a sorting unit, in which the image signals of the image signals, which are basically received via the various signal inputs, are broken down into their basic colours and the data colour-bits for the image points of an image are sorted in such a way, that at each of the signal outputs (22₁, 22₂, 22₃, 22₄, 22₅, 22₆) the received signals of a basic colour of all signal inputs (21₁, 21₂, 21₃, 21₄, 21₅, 21₆) that are associated with the respective signal output, are output.

8. The circuit arrangement according to claim 7, **characterized in that** the image signals are processed at least image-point-wise in parallel not later than after they are received via a signal input, wherein the sorted image signals sorted according to basic colours are present at least directly before the respective signal output, so that all basic colour information that is to be output via a signal output, of all signal inputs that are associated to the signal output for the same image point, is present in parallel.

9. The circuit arrangement according to claim 7 or 8, **characterized by** two signal inputs as signal inputs respectively for right and left partial images of a stereoscopic image sequence.

10. The circuit arrangement according to claim 9, **characterized by** a first and a second signal output respectively per basic colour, wherein at the first signal output for the respective basic colour, all right partial images of various image sequences received via the signal inputs are output, and wherein at the second signal output for the respective basic colour, all left partial images of various image sequences received via the signal inputs are output.

11. A projector system for the parallel display of various image sequences for different observers, **characterized in that** it contains two parallel signal processing sections for each respective basic colour, which are supplied with signals from a circuit arrangement according to any of the claims 7 to 10.

## Revendications

1. Procédé de représentation de plusieurs séquences d'images multicolores, notamment pour au moins deux observateurs, une première séquence d'images définie pour un observateur étant différente d'une autre séquence d'images définie pour un autre observateur, procédé selon lequel les séquences d'images étant projetées sur un ou plusieurs écrans de projection par au moins un appareil de reproduction d'images, **caractérisé par** les étapes suivantes :
i. réception en parallèle d'images d'au moins deux séquences d'images multicolores sous la forme de données numériques sur des entrées de signal (21₁, 21₂, 21₃, 21₄, 21₅, 21₆) prévues à cet effet, chaque image étant constituée de pixels et les données numériques pour chaque pixel contenant des informations de couleur (RᵢGᵢBᵢ) sous la forme de bits de données de couleur pour au moins trois couleurs fondamentales ;
ii. décomposition des informations de couleur (RᵢGᵢBᵢ) des pixels des images reçues en parallèle en leurs parts de couleur fondamentale (Rᵢ, Gᵢ, Bᵢ) et assemblage pixel par pixel des parts de couleur fondamentale (Rᵢ, Gᵢ, Bᵢ) des pixels d'au moins deux images reçues en parallèle respectivement en un paquet de données par couleur fondamentale,
iii. mise à disposition des paquets de données au niveau d'au moins une sortie de signal (22₁, 22₂, 22₃, 22₄, 22₅, 22₆) par couleur fondamentale, les paquets de données d'une couleur fondamentale étant délivrés à chaque sortie de signal (22₁, 22₂, 22₃, 22₄, 22₅, 22₆) ;
iv. traitement en parallèle des paquets de données des différentes couleurs fondamentales délivrés aux sorties de signal (22₁, 22₂, 22₃, 22₄, 22₅, 22₆) respectivement en au moins un canal de données par couleur fondamentale de l'au moins un projecteur ;
v. affichage simultané de toutes les parts de couleur fondamentale (Rᵢ, Gᵢ, Bᵢ) d'une image avec l'au moins un projecteur, les images des différentes séquences d'image se suivant séquentiellement.

2. Procédé selon la revendication 1, **caractérisé en ce que** les images de deux séquences d'images sont, par paires, les images partielles d'images stéréoscopiques d'une séquence d'images stéréoscopiques.

3. Procédé selon la revendication 2, **caractérisé en ce que** les images partielles d'une image stéréoscopique sont représentées séquentiellement directement les unes derrière les autres.

4. Procédé selon la revendication 2, **caractérisé en ce que** les premières images partielles des images stéréoscopiques d'au moins deux séquences d'images stéréoscopiques sont affichées en premier, viennent ensuite les deuxièmes images partielles respectives de ces séquences d'images.

5. Procédé selon l'une des revendications 1 à 4, **caractérisé en ce qu'**au moins un projecteur, notamment un projecteur DLP à puce unique, est respectivement utilisé pour la représentation de chacune des couleurs fondamentales d'une image.

6. Procédé selon l'une des revendications 1 à 4, **caractérisé en ce que** toutes les couleurs fondamentales sont représentées par un projecteur, notamment un projecteur DLP à trois puces.

7. Arrangement de circuit pour un système de projecteur, lequel convient notamment pour mettre en oeuvre un procédé selon l'une des revendications 1 à 6, **caractérisé par** :
- au moins deux entrées de signal (21₁, 21₂, 21₃, 21₄, 21₅, 21₆) dont chacune sert d'entrée pour les signaux d'image numériques d'une séquence d'images à représenter et les signaux d'image se basent sur au moins trois couleurs fondamentales,
- au moins une sortie de signal (22₁, 22₂, 22₃, 22₄, 22₅, 22₆) par couleur fondamentale, la couleur fondamentale de plusieurs entrées de signal (21₁, 21₂, 21₃, 21₄, 21₅, 21₆) étant associée à une sortie de signal (22₁, 22₂, 22₃, 22₄, 22₅, 22₆),
- une unité de tri dans laquelle les signaux d'image des signaux d'image reçus sensiblement par le biais des différentes entrées d'image sont décomposés en leurs couleurs fondamentales et les bits de données de couleur pour les pixels d'une image sont triés de telle sorte qu'à chacune des sorties de signal (22₁, 22₂, 22₃, 22₄, 22₅, 22₆) soient délivrés les signaux reçus d'une couleur fondamentale de toutes les entrées de signal (21₁, 21₂, 21₃, 21₄, 21₅, 21₆) qui sont associées à la sortie de signal respective.

8. Arrangement de circuit selon la revendication 7, **caractérisé en ce que** les signaux d'image sont traités en parallèle au moins pixel par pixel au plus tard après leur obtention par le biais d'une entrée de signal, et les signaux d'image retriés, triés d'après les couleurs fondamentales, au moins directement avant la sortie de signal correspondante, se présentent au moins de telle sorte que toutes les informations de couleur fondamentale à délivrer par le biais d'une sortie de signal de toutes les entrées de signal associées à la sortie de signal soient appliquées en parallèle à un même pixel.

9. Arrangement de circuit selon la revendication 7 ou 8, **caractérisé par** respectivement deux entrées de signal en tant qu'entrées de signal pour l'image partielle de droite et de gauche d'une séquence d'images stéréoscopiques.

10. Arrangement de circuit selon la revendication 9, **caractérisé par** respectivement une première et une deuxième sortie de signal par couleur fondamentale, toutes les images partielles de droite des différentes séquences d'images reçues par le biais des entrées de signal étant délivrées à la première sortie de signal de chaque couleur fondamentale et toutes les images partielles de gauche des différentes séquences d'images reçues par le biais des entrées de signal à la deuxième sortie de signal de chaque couleur fondamentale.

11. Système de projecteur destiné à l'affichage en parallèle de différentes séquences d'images pour des observateurs différents, **caractérisé en ce qu'**il possède deux parcours de traitement de signal parallèles pour chaque couleur fondamentale, lesquels sont alimentés avec des signaux par un arrangement de circuit selon l'une des revendications 7 à 10.
